# EUROPEAN PATENT APPLICATION

(11) **EP 4 360 801 A1**
(43) Date of publication of application: **01.05.2024**
(21) Application number: 22203267.4
(22) Date of filing: 24.10.2022
(51) Int. Cl.: B23P 15/28, B23B 51/02, B23C 5/10, B23B 51/06, B33Y 80/00, B23P 15/32, B23P 15/34

(54) **A BLANK FOR A ROTARY METAL CUTTING TOOL**

(71) Applicant: WALTER AG, 72072 Tübingen (DE)
(72) Inventor: Rogalla, Siegfried, 72072 Tübingen (DE); Hisge, Hendrik, 72072 Tübingen (DE)
(74) Representative: Sandvik

(57) **Abstract**

The present invention relates to a blank for a rotary metal cutting tool, wherein the blank comprises an elongate, one-piece body having a front end (1), a rear end (2) and a longitudinal axis (3) extending from the front end (1) to the rear end (2). The body comprises a head section (4), a shaft section (6) and a chip flute section (5), which has a maximal diameter (7). The chip flute section (5) comprises a longitudinally extending wall (8) surrounding a longitudinally extending internal cavity (9), which wall (8) has an internal wall surface (10) defining the cavity (9) and an external wall surface. The external wall surface defines a chip flute surface (11). As seen in a cross section perpendicular to the longitudinal axis (3), the wall (8) has a wall thickness (14) measured from the external wall surface to the internal wall surface (10). As seen in cross sections in positions along a major length of the chip flute section (5), circumferentially along one portion of the chip flute surface (11), the wall thickness (14) is constant and at most 25% of the maximal diameter (7) of the chip flute section (5) including a finishing allowance.

## Description

### Technical field

The present invention relates to a blank for a rotary metal cutting tool. Preferably, the blank is a drilling tool blank or a milling tool blank.

### Background

Rotary metal cutting tools such as drills and mills, are commonly produced from a blank. A known type of blanks are cylindrical or conical rods of steel or a sintered powder composition. In order to form the features of the finished rotary metal cutting tool, the rods are machined, for example by grinding. Example of such ground features are chip flutes, clearance surfaces, cutting edges and/or shafts with dimensions within desired tolerances. Another type of known blanks already have some of these features provided, for example chip flutes, which roughly correspond to their finished dimensions. After grinding, the blanks are often coated to provide the finished rotary metal cutting tool.

Beside the problem of time consuming machining, a problem with these known blanks is that consumption of blank material for their production is high.

### Summary

An object of the present invention is to at least partly obviate the above mentioned problems. This object is achieved according to the invention by means of a blank for a rotary metal cutting tool according to claim 1.

The present invention relates to a blank for a rotary metal cutting tool, wherein the blank comprises an elongate, one-piece body having a front end, a rear end and a longitudinal axis extending from the front end to the rear end, wherein the body comprises
- a head section extending longitudinally rearward from the front end,
- a shaft section extending longitudinally forward from the rear end,
- a chip flute section, which extends longitudinally and is located between the shaft section and the head section, and has a maximal diameter,
wherein
- the chip flute section comprises a longitudinally extending wall surrounding a longitudinally extending internal cavity, which wall has an internal wall surface defining the cavity and an external wall surface,
- the external wall surface defines a chip flute surface,
- as seen in a cross section perpendicular to the longitudinal axis, the wall has a wall thickness measured from the external wall surface to the internal wall surface, and wherein,
- as seen in cross sections in positions along a major length of the chip flute section, circumferentially along one portion of the chip flute surface, the wall thickness is constant and at most 25%, preferably at most 20%, and more preferably at most 15% of the maximal diameter of the chip flute section including a finishing allowance.

The inventive blank comprises a chip flute section comprising a longitudinally extending wall. The wall has an internal wall surface surrounding a cavity, an external wall surface and a wall thickness. The external wall may be designed to roughly correspond to the final shape of corresponding features of a finished rotary metal cutting tool. Specifically, the external wall surface comprises a chip flute surface.

According to production methods involving additive manufacturing producing an object by building one layer at a time, blanks can be given almost any desired shape. By designing the shape of the cavity, the wall thickness, as seen in a cross section perpendicular to the longitudinal axis and as measured from the external wall surface to the internal wall surface, can be freely selected. By selecting the wall thickness to be constant and at most 25% of the maximal diameter of the chip flute section including a finishing allowance, it is ensured that the wall is not thicker than necessary for providing sufficient strength, and allowance for post treatments such as for example grinding. Thereby, advantageously, excessive use of blank material is prevented.

The blank is suitable for producing a rotary metal cutting tool, for example a milling tool or a drilling tool. Preferably, rotary cutting tools intended to be produced from the inventive blanks are of a type sometimes referred to as "solid round tools". These tools are solid in the sense that they are one-piece, integral components with one or several integral cutting edges. Thus, the group of tools called solid round tools typically also includes tools with internal cavities, for example coolant channels. Other types of rotary metal cutting tools are of a type comprising a main body provided with exchangeable cutting inserts or exchangeable heads. According to embodiments of the present invention, the blank is suitable for producing the main tool body for such tools.

The blank comprises an elongate, one-piece body. Preferably, the body is produced by additive manufacturing, for example by building the body by forming one layer at a time, for example by printing. Preferable, a printable and sinterable powder composition is used, such as for example a powder comprising steel, or tungsten carbide and cobalt. Thus, the blank may comprise cemented carbide or steel.

The body has a front end and a rear end, and a longitudinal axis extending from the front end to the rear end. Preferably, the longitudinal axis is the axis of rotation of the finished rotary metal cutting tool. Preferably, the longitudinal axis is a center axis.

A section is to be understood as a longitudinal portion of the body, or in other words, the entirety of the body along a fraction of the longitudinal length from a first transverse cross section or an end to a second transverse cross section or an end.

The body comprises a head section which extends rearward from the front end. Optionally, the head section is a longitudinally short end portion, a section configured to be suitable to form a cutting head.

A shaft section extends forward from the rear end, and a chip flute section is located between the head section and the shaft section. Preferably, the chip flute section connects to the shaft section and the head section. According to embodiments, the body comprises further sections between the shaft section and the head section, for example transition sections.

The chip flute section has a maximal diameter. Optionally, the maximal diameter is located in a cross section in a position along the longitudinal length of the chip flute section or is the same in all cross sections along the longitudinal length of the chip flute section. The diameter may for example decrease or increase rearward from a front end of the chip flute section.

The chip flute section comprises a longitudinally extending wall surrounding a longitudinally extending internal cavity. The wall has an internal wall surface and an external wall surface. The internal wall surface defines the internal cavity along the chip flute section.

The external wall surface defines the exterior of the chip flute section.

Optionally, the wall is circumferentially closed so that the cavity has no contact with the exterior in radial directions along the longitudinal extension of the chip flute section. Optionally, the chip flute section comprises radial channels forming a fluid connection from the longitudinally extending internal cavity to the exterior of the chip flute section. These may for example form openings in the wall for coolant supply from the internal cavity.

As seen in a cross section perpendicular to the longitudinal axis, the wall has a wall thickness measured from the external wall surface to the internal wall surface. The wall thickness of the wall at a point of the wall as seen in the cross section, is a shortest length of a straight line that intersects the point as measured from the internal wall surface to the external wall surface.

The external wall surface of the chip flute section defines a chip flute surface. Preferably, the chip flute surface extends radially inward relative surfaces at the maximal diameter and forms a radially outward open channel having a longitudinal extension. Circumferentially, the channel is limited by first and second edges at intersections with radially outer surfaces. In the finished rotary metal cutting tool, these edges may be leading and trailing edges as seen in the direction of rotation. Optionally, the channel is straight in the longitudinal direction, or extends at an angle relative the longitudinal axis, such as to form a rearward extending helix with constant, increasing, decreasing, or in any other desired way varying helix angle. In the finished rotary metal cutting tool, the channel may form a chip flute with or without further treatments such as coating. Preferably, as seen in a cross section perpendicular to the longitudinal axis, the chip flute surface is concave inward.

As seen in cross sections in positions along a major length of the chip flute section and preferably along the entire length of the chip flute section, circumferentially along one portion of the chip flute surface, the wall thickness is constant and at most 25% of the maximal diameter of the chip flute section including a finishing allowance. Preferably, the wall thickness is constant and at most 20, and more preferably, at most 15% of the maximal diameter of the chip flute section including a finishing allowance. While it is beneficial for low material consumption to have a small wall thickness, for blanks with a small maximal diameter, a larger percentage is sometimes necessary to achieve a thickness that is sufficient for providing acceptable strength. The chip flute surface may comprise several such portions. As seen in the cross sections, preferably the one portion or the several portions constitute a major portion of the chip flute surface. The chip flute surface may have areas wherein the wall thickness is as defined. The chip flute surface may comprise several such areas, or the area is a continuous area. Preferably, the area extends over the entire chip flute surface except at portions along edges thereof and/or at any internal structures in the cavity. Preferably, the total area constitutes at least 50%, preferably at least 75%, of the chip flute surface.

According to an embodiment, the chip flute section furthermore defines a body clearance surface. Preferably, the body clearance surface is configured to be suitable for a radially outer surface extending rotationally forward from a rotationally leading edge of a chip flute surface of a finished rotary metal cutting tool. The body clearance surface is for example suitable for a clearance surface rotationally behind a cutting edge in a milling tool, or a clearance surface rotationally behind a margin surface in a drilling tool.

According to an embodiment, as seen in cross sections in positions along a major length of the chip flute section and preferably along the entire length of the chip flute section, circumferentially along one portion of the body clearance surface, the wall thickness is constant and at most 25% of the maximal diameter of the chip flute section. Preferably, the wall thickness is constant and at most 20, and more preferably, at most 15% of the maximal diameter of the chip flute section. While it is beneficial for a low material consumption to have a small wall thickness, for blanks with a small maximal diameter, a larger percentage is sometimes necessary to achieve a thickness that is sufficient for providing acceptable strength. The body clearance surface may comprise several such portions. As seen in the cross sections, preferably the one portion or the several portions constitute a major portion of the body clearance surface. The body clearance surface may have areas wherein the wall thickness is as defined. The chip flute surface may comprise several such areas, or the area is a continuous area. Preferably, the area extends over the entire body clearance surface except at portions along edges thereof and/or at any internal structures in the cavity. Preferably, the total area constitutes at least 50%, preferably at least 75%, of the body clearance surface.

According to an embodiment, the internal wall surface substantially follows the contour of the external wall surface along the one portion of the chip flute surface and/or along the one portion of the body clearance surface. Preferably, the internal wall surface follows the contour of the external wall surface along the major portions. Preferably, the internal wall surface follows the contour of the external wall surface except at portions along edges thereof and/or at any internal structures in the cavity.

According to an embodiment, as seen in cross sections in positions along a major length of the chip flute section, the wall thickness along the one portion of the body clearance surface is smaller than the wall thickness along the one portion of the chip flute surface. Preferably, the wall thickness along the one portion of the of the body clearance surface has no finishing allowance. Since tolerance are less critical at this part of a finished tool, it is possible to produce the surface within tolerances without allowance for grinding. Thereby advantageously further blank material can be saved.

According to an embodiment, the shaft section has a maximal diameter. Optionally, the maximal diameter is located in a cross section in a positions along the longitudinal length of the shaft section or is the same in all cross sections along the longitudinal length of the shaft section. The diameter may for example decrease or increase rearward from a front end of the shaft section.

The shaft section comprises a longitudinally extending wall surrounding a longitudinally extending internal cavity, which wall has an internal wall surface defining the cavity and an external wall surface defining the exterior of the shaft section. As seen in a cross section perpendicular to the longitudinal axis, the wall has a wall thickness measured from the external wall surface to the internal wall surface. The wall thickness is to be understood and measured corresponding to the wall thickness of the chip flute section.

Preferably, the internal cavity of the shaft section and the internal cavity of the chip flute section are aligned and in fluid connection. The cavities may for example be a single continuous cavity.

Preferably, the external surface of the shaft section is configured to be suitable for producing surfaces of a finished rotary metal cutting tool for connecting it to a machine spindle or an adapter for connecting it to machine spindle. The external surface of the shaft section may for example be a conical or a cylindrical surface. The surface may comprise features for producing elements forming one part of an interlocking connection such as grooves or projections.

Preferably the rear end of the shaft section, which is also the rear end of the blank, is open. Thereby excess blank material in form of powder from production by for example a printing step in an additive manufacturing process, is removable from the internal cavity. The powder material can be collected and in some applications reused.

According to an embodiment, as seen in cross sections in positions along a major length of the shaft section and preferably along the entire length of the chip flute section, circumferentially along one portion of the external surface of the shaft section, the wall thickness is constant and at most 25% of the maximal diameter of the shaft section including a finishing allowance. Preferably, the wall thickness is constant and at most 20, and more preferably, at most 15% of the maximal diameter of the shaft section. While it is beneficial for a low material consumption to have a small wall thickness, for blanks with a small maximal diameter, a larger percentage is sometimes necessary to achieve a thickness that is sufficient for providing acceptable strength. The external surface of the shaft section may comprise several such portions. As seen in the cross sections, preferably the one portion or the several portions constitute a major portion of the external surface of the shaft section. he external surface of the shaft section may have areas wherein the wall thickness is as defined. The external wall surface of the shaft section may comprise several such areas or the area is a continuous area. Preferably, the area extends over the entire external wall surface of the shaft section, or over the entire external wall surface of the shaft section except at portions at any internal structures in the cavity. Preferably, the total area constitute at least 50%, preferably at least 75%, of the external wall surface of the shaft section.

The wall thickness may be measured corresponding to the wall thickness of the chip flute section.

According to an embodiment, the internal wall surface substantially follows the contour of the external wall surface along the one portion of the external surface of the shaft section. Preferably, the internal wall surface follows the contour of the external wall surface except at portions along at any internal structures in the cavity.

Preferably, as seen in cross sections along a major length of the shaft section, the wall thickness along the one portion of the external wall surface is larger than the wall thickness along the one portion of the chip flute surface.

According to an embodiment, as seen in cross sections in positions along a major length of the shaft section, the wall thickness of the one portion of the external wall surface of the shaft section is equal to the wall thickness along the one portion of the body clearance surface of the chip flute section. Thereby, it is ensured that along both portions, the wall is not thicker than necessary for providing sufficient strength and allowance for post treatments such as for example grinding. Thereby, advantageously excessive use of blank material is prevented.

According to a preferred embodiment, all the total areas together constitute at least 50%, preferably at least 75%, of the total area of the respective surfaces. Thereby, advantageously, excessive use of blank material is prevented.

Preferably, the wall thickness along each the one proportions of the chip flute surface and/or the body clearance surface is at least 5% of the maximal diameter of the chip flute section. Preferably, the wall thickness along the one proportion of the external surface of the shaft section is at least 5% of the maximal diameter of the shaft section. Thereby it is ensured that the wall has sufficient strength.

According to an embodiment, the body of the blank further comprises a central core rod extending along the longitudinal axis through the cavity of the shaft and/or the chip flute section. For example, the core rod may extend through the chip flute section and touch to connect with the internal wall surface at the deepest point of the channel that will form the chip flute in the finished rotary metal cutting tool. According to an embodiment, the body of the blank further comprises a plurality of longitudinally extending partitions each extending from the core rod to an internal wall surface in the cavity of the shaft section and/or chip flute section. The core rod and/or partitions form internal structures in the cavity. The partitions may for example be radially extending internal walls, which may have a wall thickness that is less than the wall thickness in the areas of the external wall surfaces. These embodiments provide enhanced stability while still significantly reducing blank material as compared to prior art blanks. Preferably the internal structures extend through the shaft section, where the added strength is especially advantageous dure to this portion possibly being subjected to high clamping forces at an interconnection with a machine spindle in the finished rotary metal cutting tool produced from the blank. In other embodiments, the internal structures in addition or instead extend through the chip flute section. There they add stability so that undesired twisting and bending during operation of a finished rotary metal cutting tool produced from the blank is reduced.

According to an embodiment, the blank is a drilling tool blank wherein the external wall surface furthermore defines a longitudinally extending margin surface, which circumferentially is located between the chip flute surface and the body clearance surface, and which intersects the chip flute surface, and wherein, as seen in each cross section perpendicular to the longitudinal axis, the margin surface forms an arc with a radius of curvature of half the largest diameter of the cross section. Thereby it is ensured that the external wall surface of the chip flute section corresponds as closely as possible an external wall surface of a finished drill produced from the blank so that unnecessary grinding and material waste is avoided.

Preferably, the body clearance surface of the drilling tool blank, as seen in the circumferential direction of rotation of the finished drilling tool, extends rotationally behind the margin surface and connects, with a trailing edge, to a leading edge of the chip flute surface.

According to an embodiment, the finishing allowance is 0,1 - 0,5 mm, preferably 0,15 - 0,45 mm. The finishing allowance may be constant for all concerned external surfaces of the blank, or be adapted to the amount that is necessary for post treatment in form of for example grinding in each specific location. Specifically, the finishing allowance at the margin may differ from the finishing allowance of other surfaces since the demand relating to support of a finished tool may require more or less grinding than other surfaces. The finishing allowance in the areas of the chip flute surface and the external surface of the shaft section may be for example 0,15 - 0,45 mm.

Optionally, the head section is a solid or comprises an internal cavity. Preferably, the head section comprises at least one internal coolant channel, which opens axially forward and/or radially outward.

According to an embodiment wherein the blank is a drilling tool blank, the front end of the head section is a cone having a cone angle of 90 - 150°. Preferably, the axial length of the cone is 0,75 - 1,5 times the maximal diameter of the chip flute section. These features are suitable for producing cutting edges for the finished drilling tool and reduce further blank material needed as compared to cylindrical head sections of prior art blanks. Optionally, the head section comprises insert seats for receiving cutting inserts.

According to an embodiment, the blank is a milling tool blank comprising, at an intersection of the chip flute surface and the body clearance surface, an edge for forming a cutting edge. Preferably, the body clearance surface has a smooth transition to the chip flute surface at a rotationally leading portion of the chip flute surface.

Optionally, the milling tool blank comprises a head section in form of an axially short, closed front end, or a solid head section with sufficient axial extension to enable grinding of front end cutting edges. Optionally, the closed end comprises openings for coolant. Preferably, the head section of the drilling tool blank or the milling tool blank comprises surfaces for forming a front end start of the chip flute surface.

According to an embodiment, the external wall surface of the chip flute section comprises a plurality of the chip flute surfaces and a plurality of the body clearance surfaces, wherein the chip flute surfaces and the body clearance surfaces are arranged alternating in the circumferential direction. Preferably, the number of chip flute surfaces forming channels for chip flutes in the finished rotary metal cutting tool produced from the blank, corresponds to the number of cutting edges that the finished tool will have.

The present invention furthermore relates to a rotary metal cutting tool produced by grinding the blank for a rotary metal cutting tool as described herein. Preferably, the rotary metal cutting tool is a drilling tool or a milling tool.

### Brief description of the drawings

In the following, example embodiments will be described in greater detail and with reference to the accompanying drawings, in which:
Fig. 1 is a perspective top view of a first embodiment of the present invention in form of a drilling tool blank;
Fig. 2 is a perspective bottom view of the first embodiment;
Fig. 3 is a longitudinal section comprising a central longitudinal axis of the first embodiment;
Fig. 4 is a side view of the first embodiment;
Fig. 5A - 5C are cross sections of the first embodiment in axial positions indicated in Fig. 4;
Fig. 6 is a perspective top view of a second embodiment of the present invention in form of a drilling tool blank with internal structures;
Fig. 7 is a perspective bottom view of the second embodiment;
Fig. 8 is a longitudinal section comprising a central longitudinal axis of the second embodiment;
Fig. 9 is a side view of the second embodiment;

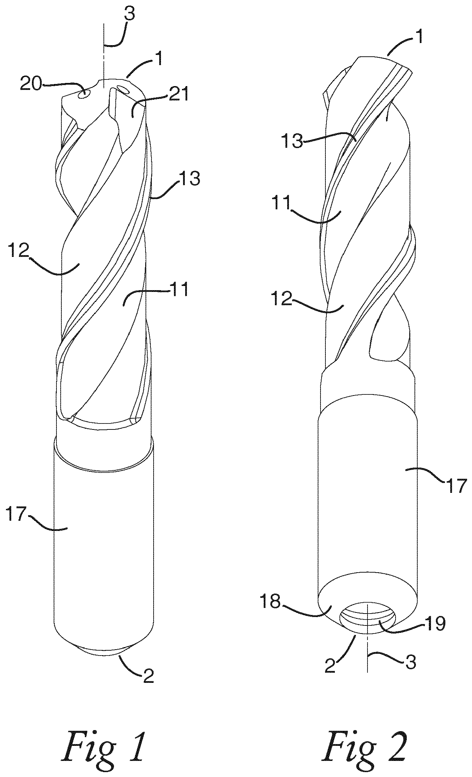

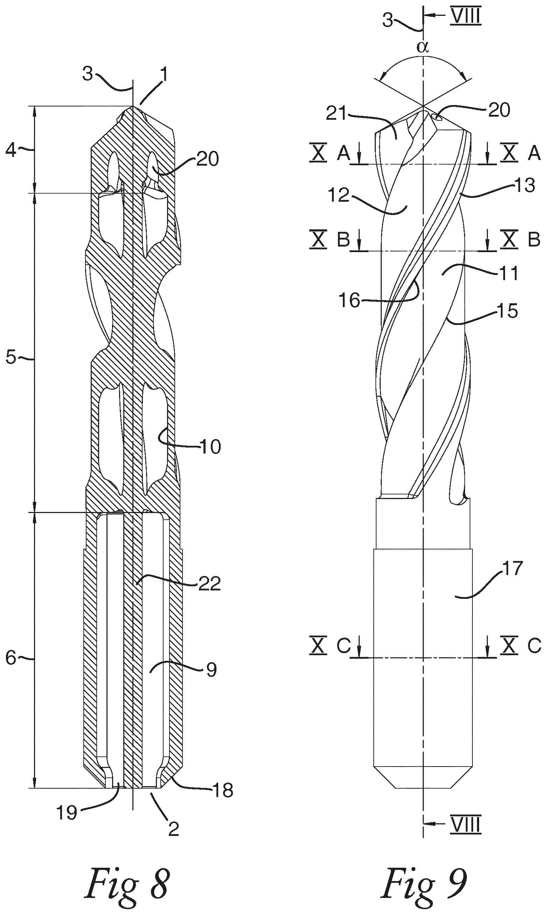

Fig.1 0A - 10C are cross sections of the first embodiment in axial positions indicated in Fig. 9;

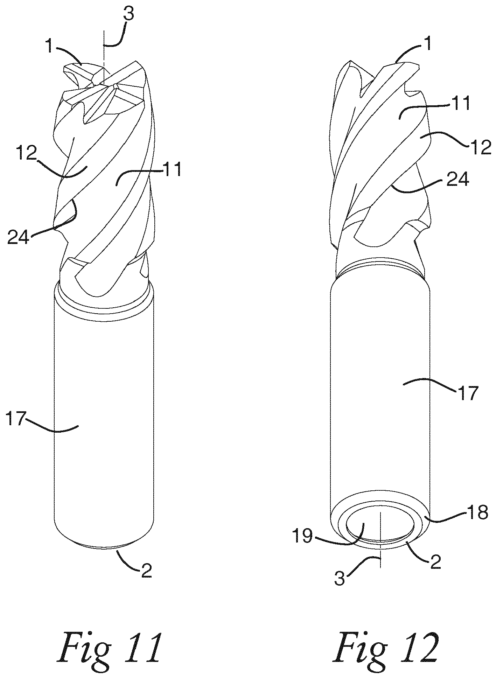

Fig. 11 is a perspective top view of a third embodiment of the present invention in form of a milling tool blank;
Fig. 12 is a perspective bottom view of the third embodiment;

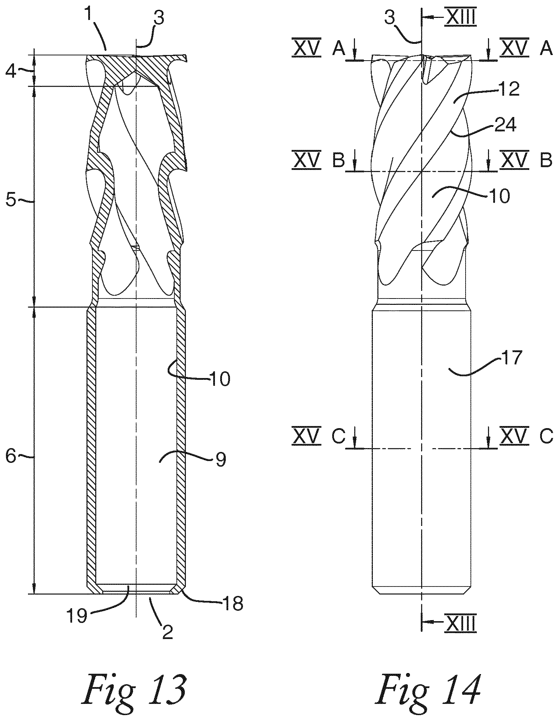

Fig. 13 is a longitudinal section comprising a central longitudinal axis of the third embodiment;
Fig. 14 is a side view of the third embodiment; and

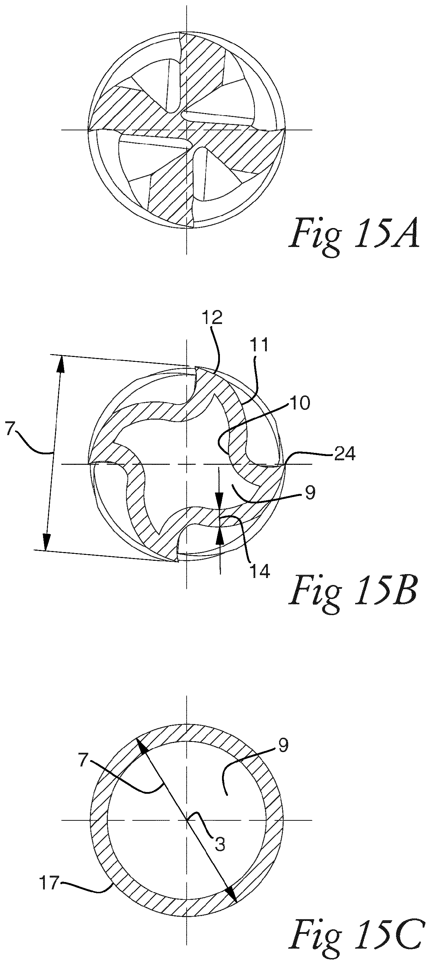

Fig. 15A - 15C are cross sections of the third embodiment in axial positions indicated in Fig. 14.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

With reference to Figs. 1 - 5, a first embodiment of the blank for a rotary metal cutting tool according to the invention in form of a drilling tool blank is described. The drilling tool blank comprises an elongate one-piece body with a front end 1 and a rear end 2.

The drilling tool blank is produced by an additive manufacturing process comprising a step of printing a printable and sinterable powder composition comprising tungsten carbide and cobalt. After printing, the printed green body has been sintered to form the drilling tool blank. In subsequent production step, the drilling tool blank may be ground and coated in order to obtain a drilling tool of a type sometimes referred to as a solid round tool, which in the example embodiment is a twist drill.

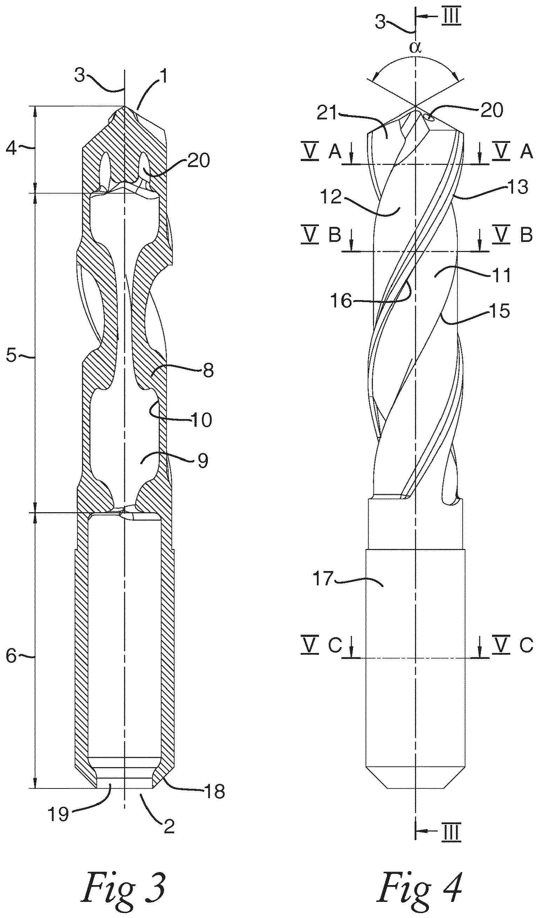

A longitudinal axis 3 extends from the front end 1 to the rear end 2. The longitudinal axis 3 is a center axis and will form the axis of rotation in the finished drilling tool. The body comprises a head section 4, a chip flute section 5 and a shaft section 6, c.f. Fig. 3. These three sections 4, 5, 6 together form the one-piece body.

The chip flute section 5 is located axially between the head section 4 and the shaft section 6. The chip flute section has a maximal diameter 7, which is constant along the longitudinal extension of the chip flute section 5. In the example embodiment, the maximal diameter 7 is 6,6 mm.

The chip flute section 5 comprises a longitudinally extending wall 8 surrounding a longitudinally extending internal cavity 9. The wall 8 is circumferentially closed so that the cavity has no contact with the exterior in radial directions along the longitudinal extension of the chip flute section 5.

The wall 8 has an internal wall surface 10 and an external wall surface. The internal wall surface 10 defines the internal cavity 9 along the chip flute section 5.

The external wall surface defines the exterior of the chip flute section 5, which includes a chip flute surface 11, a body clearance surface 12 and a margin surface 13.

The chip flute surface 11 extends radially inward relative the maximal diameter 7 and forms a radially outward open channel having a longitudinal extension. Circumferentially, the channel is limited by a first edge 15 at an intersection of the chip flute surface 11 with the body clearance surface 12, and by a second edge 16 at the margin surface 13. In the finished drilling tool, the first edge 15 is a rotationally leading edge of the chip flute surface 11, and the second edge 16 is a rotationally trailing edge of the chip flute surface 11. The channel forms a rearward extending helix with a constant helix angle. The chip flute surface 11 is concave radially inward.

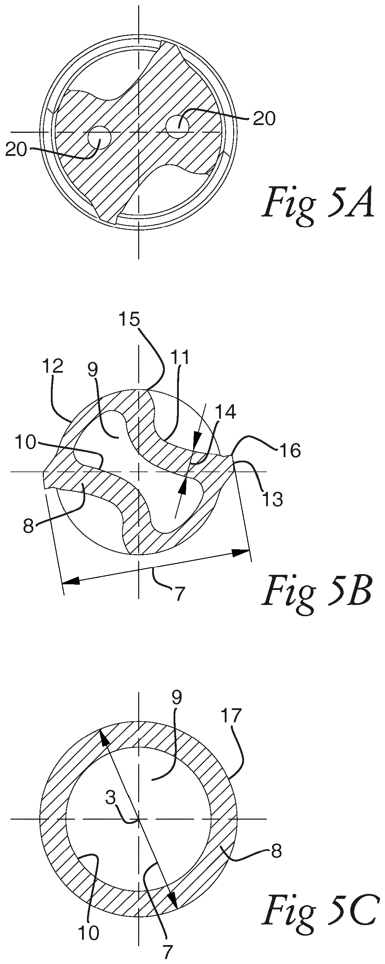

As seen in the cross section perpendicular to the longitudinal axis according to Fig. 5B, the wall 8 has a wall thickness 14 measured from the external wall surface to the internal wall surface. Circumferentially along one portion of the chip flute surface 11, the wall thickness 14 is constant and at most 20% of the maximal diameter 7 including a finishing allowance. For a drilling tool blank having a maximal diameter 7 of 6,6mm in the chip flute section 5, it is preferred to have a larger wall thickness 14 of at most 20% of the maximal diameter due to requirements on strength. In the example embodiment, the wall thickness is 0,9 mm, wherein the finishing allowance is 0,4 mm. In the example embodiment, the wall thickness 14 of the portion of the chip flute surface 11 is constant following the chip flute surface 11 along the helix in the longitudinal direction. The total area of the chip flute surface, where the wall thickness 14 is constant, covers the entire chip flute 11 surface except at the first edge 15 and at the second edge 16, where the wall 8 forms a corner with the body clearance surface 12 and the margin surface 13, respectively. The total area of the chip flutes surface 11 where the wall thickness 14 is constant, is a continuous surface of more than 75% of the total chip flute surface 11.

Furthermore with reference to Fig. 5B, circumferentially along one portion of the body clearance surface 12, the wall thickness 14 is constant and at most 20% of the maximal diameter 7. In the example embodiment, the wall thickness is 0,5, wherein there is no finishing allowance. Thus, the wall thickness 14 along the portion the body clearance surface 12 is smaller than the wall thickness 14 along the portion of the chip flute surface 11 by the finishing allowance of 0,4 mm. In the example embodiment, the wall thickness 14 of the portion of body clearance surface 12 is constant following the body clearance surface 12 along the helix in the longitudinal direction. The total area of the body clearance surface 12, where the wall thickness 14 is constant, covers the body clearance surface 12 except in areas where the wall 8 forms a corner with the wall 8 with chip flute surface 12 and the wall 8 with the margin surface 13. The total area of the body clearance surface 12 where the wall thickness 14 is constant, is a continuous surface of more than 75% of the total body clearance surface 12.

With reference to Figs. 1, 2, the margin surface 13 extends longitudinally along the chip flute section 5 and follows the helix of the chip flute surface 11 at the second edge 16 thereof. Thus, the margin surface 13 circumferentially is located between the chip flute surface 11 and the body clearance surface 12, and intersects the chip flute surface 11 at the second edge 16 of the chip flute surface 11.

As seen in the cross section of Fig. 5B, the margin surface 13 forms an arc with a radius of curvature of half the largest diameter of the cross section. In the example embodiment, wherein the maximal diameter 7 is constant along the longitudinal length of the chip flute section 5, the maximal dimeter 7 of the chip flute section is 2 times the radius of curvature. The radius of curvature is equal to the desired radius of curvature of the finished drilling tool including a finishing allowance. In this and other embodiments, the desired radius of curvature of the finished drilling tool is the radius that is desired for the supportive function of the margin surfaces. The finishing allowance of the margin is in the example embodiment 0,3 mm.

As can be seen in Fig. 5B, in the chip flute section, the internal wall surface 10 substantially follows the contour of the external wall surface along a major portion of the chip flute surface 11 and along a major portion of the body clearance surface 12. The internal wall surface 10 follows the contour of the external wall surface except at corner portions at the first edge 15 and at the second edge 16.

The shaft section 6 comprises a longitudinally extending wall 8 surrounding a longitudinally extending internal cavity 9. The internal cavity 9 of the shaft section 6 is continuous with the internal cavity 9 of the chip flute section 5.The wall 8 has an internal wall surface 10 defining the cavity and an external wall surface 17. The shaft section 6 in this and other embodiments has the shape of a hollow cylinder, wherein the external wall surface 17 and the internal wall surface 10 are circles with different diameters as seen in cross sections in positions along the longitudinal extension of the shaft section 6. The diameter of the external wall surface 17 constitutes the maximal diameter 7 of the shaft section 6 and is constant along the major longitudinal length of the shaft section 6. Consequently, the wall thickness 14 is constant both in the circumferential direction and along a major portion in the longitudinal direction. The total area of the external wall surface 17 of the shaft section 6 where the wall thickness 14 is constant, is a continuous surface of more than 75% of the total external wall surface 17 of the shaft section 6.

In the example embodiment, the maximal diameter 7 of the shaft section is 6,6 mm. The constant wall thickness 14 of the shaft section 6 is at most 20% of the maximal diameter of the shaft section including a finishing allowance. In the example embodiment, the wall thickness 14 of this major portion of the shaft section 6 is 0,9 mm, wherein the finishing allowance is 0,4 mm. Thus, the wall thickness as well as the finishing allowance of the wall thickness 14 at the external wall surface 17 of the shaft section 6 are equal to the wall thickness as well as the finishing allowance, respectively, at the chip flute surface.

At the rear end, the shaft section 6 comprises a bevel portion 18 and a circular opening 19 that connects with the internal cavity 9. The internal cavity 9 is in fluid connection with the exterior by the opening 19.

The head section 4 is a solid and comprises 2 internal coolant channels 20, which open axially forward.

The front end of the head section 4 comprises cone surfaces having a cone angle α of 120°. The axial length of the cone is ca 0,9 times the maximal dimeter 7 of the chip flute section 5 and in the example embodiment 6,6 mm. The head section 4 further comprises surfaces for forming a front end start 21 of the chip flute surface 11.

The head section 4 with the cone surface is configured to provide two cutting edges in the finished drilling tool. The external wall surface of the chip flute section 5 of the drilling tool blank comprises two of the chip flute surfaces 11, two of the body clearance surfaces 12, and two margin surfaces 13 as described above. These surfaces are arranged alternating in the circumferential direction in accordance with their respective associated cutting edge.

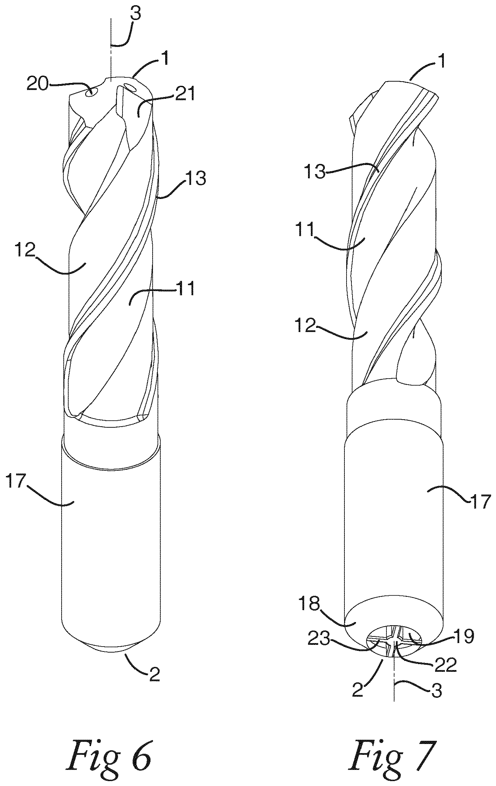

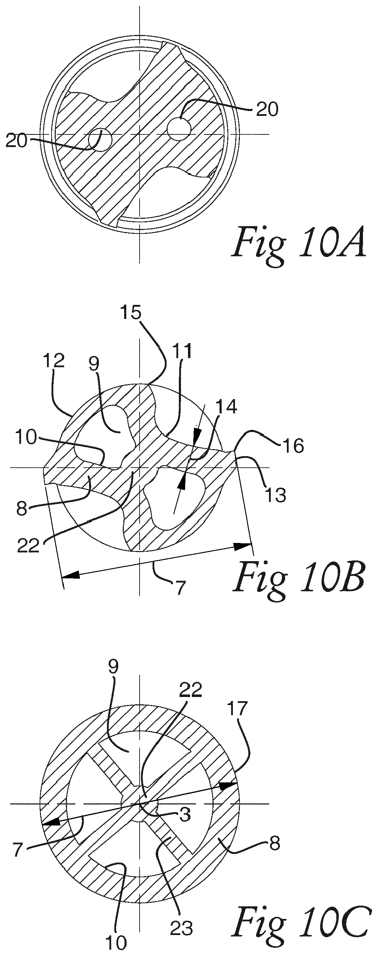

Figs. 6 - 10 show a second embodiment of the blank according to the present invention are described.

The second embodiment in form of a drilling tool blank differs from the first embodiment only in that it comprises internal structures in the internal cavity 9. In the chip flute section 5, a central core rod 22 extends along the longitudinal. The core rod 22 touches and connects with the internal wall surface 10 at the deepest point of the channel that will form the chip flute in the finished rotary metal cutting tool. The channel is defined by the chip flute surface 11.

The core rod 22 extends through also the shaft section 6. The core rod 6 of the shaft section 6 is continuous with the core rod 22 of the chip flute section 5. A plurality of longitudinally extending partitions 23, in the example embodiment four, each extend from the core rod 22 to the internal wall surface 10 in the cavity 9.

The third embodiment is a milling tool blank and is shown in Figs. 11 - 15. The milling tool blank differs from the first embodiment in that it lacks a margin surface 13 and that instead, at an intersection of the chip flute surface 11 and the body clearance surface 12, an edge 24 for forming a cutting edge is provided. Preferably, the body clearance surface 12 has a smooth transition to the chip flute surface 11 at a rotationally leading portion of the chip flute surface. The head section 4 is a solid with sufficient axial extension to enable grinding of front end cutting edges. The front end is closed toward the internal cavity 9..

## Claims

1. A blank for a rotary metal cutting tool, wherein the blank comprises an elongate, one-piece body having a front end (1), a rear end (2) and a longitudinal axis (3) extending from the front end (1) to the rear end (2), wherein the body comprises
- a head section (4) extending longitudinally rearward from the front end (1),
- a shaft section (6) extending longitudinally forward from the rear end (2),
- a chip flute section (5), which extends longitudinally and is located between the shaft section (6) and the head section (4), and has a maximal diameter (7),
wherein
- the chip flute section (5) comprises a longitudinally extending wall (8) surrounding a longitudinally extending internal cavity (9), which wall (8) has an internal wall surface (10) defining the cavity (9) and an external wall surface,
- the external wall surface defines a chip flute surface (11), and wherein,
- as seen in a cross section perpendicular to the longitudinal axis (3), the wall (8) has a wall thickness (14) measured from the external wall surface to the internal wall surface (10),
**characterized in that,**
as seen in cross sections in positions along a major length of the chip flute section (5), circumferentially along one portion of the chip flute surface (11), the wall thickness (14) is constant and at most 25%, preferably at most 20%, and more preferably at most 15% of the maximal diameter (7) of the chip flute section (5) including a finishing allowance.

2. The blank as claimed in claim 1, wherein the external wall surface of the chip flute section (5) furthermore defines a body clearance surface (12), wherein, as seen in cross sections in positions along a major length of the chip flute section (5), circumferentially along one portion of the body clearance surface (12), the wall thickness (14) is constant and at most 25%, preferably at most 20%, and more preferably at most 15% of the maximal diameter (7) of the chip flute section (5).

3. The blank according to claim 2, wherein, as seen in cross sections in positions along a major length of the chip flute section (5), the wall thickness (14) along the one portion of the body clearance surface (12) is smaller than the wall thickness (14) along the one portion of the chip flute surface (11).

4. The blank as claimed in any preceding claims, wherein
- the shaft section (6) has a maximal diameter (7),
- the shaft section (6) comprises a longitudinally extending wall (8) surrounding a longitudinally extending internal cavity, which wall (8) has an internal wall surface (10) defining the cavity and an external wall surface (17), and,
- as seen in a cross section perpendicular to the longitudinal axis (3), the wall (8) has a wall thickness (14) measured from the external wall surface (17) to the internal wall surface (10),
- as seen in cross sections in positions along a major length of the shaft section (6), circumferentially along one portion of the external surface of the shaft section (6), the wall thickness (14) is constant and at most 25%, preferably at most 20%, and more preferably at most 15% of the maximal diameter (7) of the shaft section (6) including a finishing allowance.

5. The blank as claimed in claim 4 and any of the claims 2 - 3, as seen in cross sections in positions along a major length of the shaft section (6), the wall thickness (14) of the one portion of the external wall surface (17) of the shaft section (6) is equal to the wall thickness (14) along the one portion of the chip flute surface (11) of the chip flute section (5).

6. The blank as claimed in any preceding claims, wherein the chip flute surface (11), the body clearance surface (12) or the external wall surface (17) of the shaft section (6) each have areas wherein the wall thickness (14) is as defined, wherein a total area of each respective surface constitute at least 50%, preferably at least 75%, of the respective surface.

7. The blank as claimed in claim 6, wherein all the total areas together constitute at least 50%, preferably at least 75%, of the total area of the surfaces.

8. The blank as claimed in any preceding claims, wherein the finishing allowance is 0,1 - 0,5 mm, preferably 0,15 - 0,45 mm.

9. The blank as claimed in any preceding claims, further comprising a central core rod (22) extending along the longitudinal axis (3) through the cavity of the shaft section (6) and/or the chip flute section (5).

10. The blank as claimed in claim 9, further comprising a plurality of longitudinally extending partitions (23) each extending from the core rod to an internal wall surface (10) in the cavity of the shaft section (6) and/or chip flute section (5).

11. The blank as claimed in any preceding claims, wherein the blank is a printed and sintered component comprising a cemented carbide composition.

12. The blank as claimed in any claim 2 - 11, wherein the blank is a drilling tool blank, wherein
- the external wall surface furthermore defines a longitudinally extending margin surface (13), which circumferentially is located between the chip flute surface (11) and the body clearance surface (12), and which intersects the chip flute surface (11), and wherein,
- as seen in a cross section perpendicular to the longitudinal axis (3), the margin surface (13) forms an arc with a radius of curvature of half the largest diameter of the cross section.

13. The blank as claimed in claim 12, wherein the head section (4) is a solid comprising at least one internal coolant channel (20).

14. The blank as claimed in any claims 2 - 11, wherein the blank is a milling tool blank comprising, at an intersection of the chip flute surface (11) and the body clearance surface (12), an edge (24) for forming a cutting edge.

15. The blank as claimed in claim 2 - 14, wherein the external wall surface of the chip flute section (5) comprises a plurality of the chip flute surfaces (11) and a plurality of the body clearance surfaces (12), wherein the chip flute surfaces (11) and the body clearance surfaces (12) are arranged alternating in the circumferential direction.

16. A rotary metal cutting tool produced by grinding the blank for a rotary metal cutting tool according to any of the preceding claims.
